# EUROPEAN PATENT SPECIFICATION

(11) **EP 0 624 220 B1**
(45) Date of publication and mention of the grant of the patent: **06.10.1999**
(21) Application number: 93902609.2
(22) Date of filing: 21.12.1992
(51) Int. Cl.: E04F 11/18, F16B 7/04, F16B 2/04, F16B 12/40

(54) **COUPLING DEVICE**
KUPPLUNGSVORRICHTUNG
DISPOSITIF DE RACCORDEMENT

(30) Priority: 21.01.1992 SE 9200176
(43) Date of publication of application: 17.11.1994
(73) Proprietor: WELAND AB, S-333 31 Smalandsstenar (SE)
(72) Inventor: WELANDSSON, Gösta, S-333 31 Smalandsstenar (SE)
(74) Representative: Wallengren, Yngvar
(86) International application number: SE9200885
(87) International publication number: WO9314285

(56) References cited:
- DE-A- 2 653 750
- DK-B- 153 004
- GB-A- 1 335 702
- US-A- 3 977 800
- US-A- 4 440 518
- US-A- 4 859 109

## Description

### TECHNICAL FIELD

The present invention relates to a pipe coupling arrangement including two chuck devices expandable away from one another by means of screws and disposed interiorly in and bridging the joint between those pipes to be coupled said chuck devices being substantially rigid and in the form of substantially semi-cylindrical or part cylindrical shell shaped bodies, said pipes having openings for access to the screws, said chuck devices having, on the outside, projecting circumferentially extending rigidifying ribs the outer surfaces thereof forming clamping surfaces substantially complementary to the interior surfaces of the pipes, recessed surfaces being provided between adjacent clamping surfaces.

### BACKGROUND ART

In the erection of pipe constructions such as staircase banisters, balustrades and the like, the level of precision in mutually meeting pipe ends is often so poor that there may be relatively large tension forces inherent in the construction, for which reason the pipe ends must be forced into correct connection or coupling positions. Furthermore, the tolerances on mutually meeting pipe ends and their surface smoothness - in particular interiorly - may be dubious in quality because of longitudinal weld seams, hot galvanizing and the like. This places additional requirements that the coupling device, against tension forces and despite the above-mentioned configuration and dimension tolerances, must be capable of aligning mutually meeting pipe ends so that the couplings or joints will exteriorly be as smooth as possible, and also be capable, despite tensions in the construction, of keeping mutually meeting pipes in place.

In prior art designs and constructions, pipe couplings have often been effected in such a manner that a plug is inserted in the one pipe end, the plug being welded in place, whereafter the plug is inserted in the opposing pipe end. Once the plug has been inserted in this manner in the pipe end, one or more transverse bores are made through the pipe end and the plug inserted therein is removed and closure pins driven into the thus formed openings or bores.

Such a connection does not realize sufficiently hard positional fixing and centering of mutually meeting pipe ends. The result has rather tended to be cracks and unevenness in the pipe coupling so that the coupling and the plug ends inserted therein must often be filled or masked to conceal these defects in precision.

Nor does the above-described prior art coupling possess sufficient mechanical strength but shows a tendency to become loose when the pipes are exposed to dynamic loadings.

The prior art construction mentioned by way of introduction has not been employed within that area for which the present invention is intended but has occurred in other contexts where pipes need to be coupled. However, these designs have been such that the costs for the coupling device were high at the same time as capacity to compensate for configurational and dimensional tolerances has been poor. In addition, the engagement force involved has proved to be defective in certain cases.

US-A-3 977 800 discloses a connector for structural members, such as tubes, several of which are brought together of a corner zone or the like. This connector has a rigid solid body from which clamping limbs extend pairwise in different directions. The clamping limbs are of a one piece manufacture with the body and may therefore be considered as being fixedly secured therein. At a distance from the body clamping screws are used for deforming the clamping limbs and forcing - or splaying - them away from one another thereby to internally clamp an end-portion of a pipe.

The inherent weakness of the clamping limbs means that a joint made by this connector would not process the necessary strength both to align and connect abutting pipe ends in a staircase bannister.

US-A-4 859 109 discloses a clamp for joining hollow tubular members in end to end abutting relationship and having two stift members with smooth surfaces for complementary contacting internal surfaces of said tubular members. There is a screw pressing the two stift members apart to clamp against the internal surfaces. One of the stift members have two projections received in corresponding openings in the walls of the tubular members.

The smooth surfaces on the stift members implies that no shape irregularities, such as welding seams, could be compensated for. Further, the frictional forces obtainable are too small and, finally, the projections received in corresponding openings do not allow for positional adjustments of the tubular members.

### PROBLEM STRUCTURE

The present invention has for its object to realize a coupling device of the type mentioned by way of introduction, the coupling device being designed in such a manner as to obviate the shortcomings inherent in prior art technology. In particular, the present invention has for its object to realize a coupling device which gives an extremely great centering and aligning effect which creates an extremely large engagement force even if the engagement surfaces of the pipes are not smooth or are defective in any other way. Finally, the present invention also has for its object to realize a coupling device which may be manufactured in large series at low cost and with the sought-for high quality.

### SOLUTION

The objects forming the basis of the present invention will be attained if the pipe coupling arrangement mentioned by way of introduction is characterized by the features mentioned in claim 1.

### BRIEF DESCRIPTION OF THE ACCOMPANYING DRAWINGS

The present invention will now be described in greater detail hereinbelow, with particular reference to the accompanying Drawings In the accompanying Drawings:
Fig. 1 is a side elevation of a part of a coupling device according to the present invention;
Fig. 2 is a section taken along the section marking A-A in Fig. 1;
Fig. 3 is a section taken along the section marking B-B in Fig. 1; and

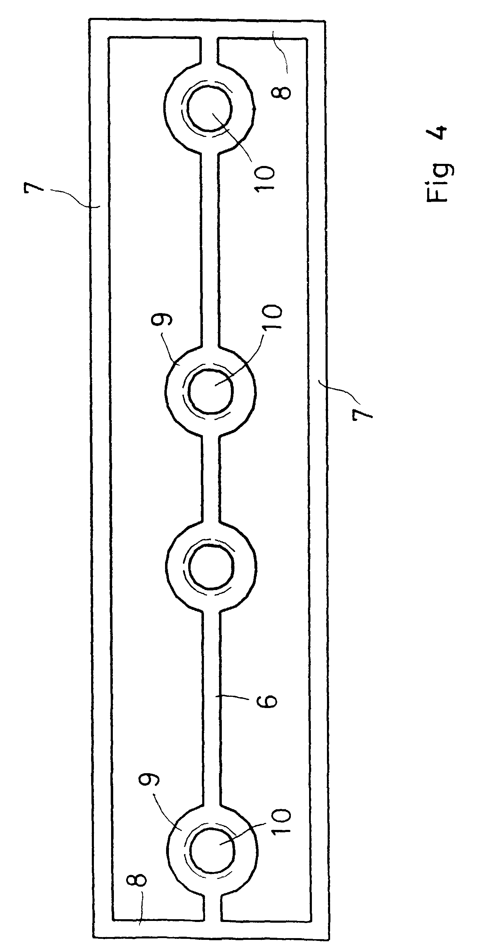

Fig. 4 shows one of the chuck devices illustrated in Fig. 1, seen from the inside.

### DESCRIPTION OF PREFERRED EMBODIMENT

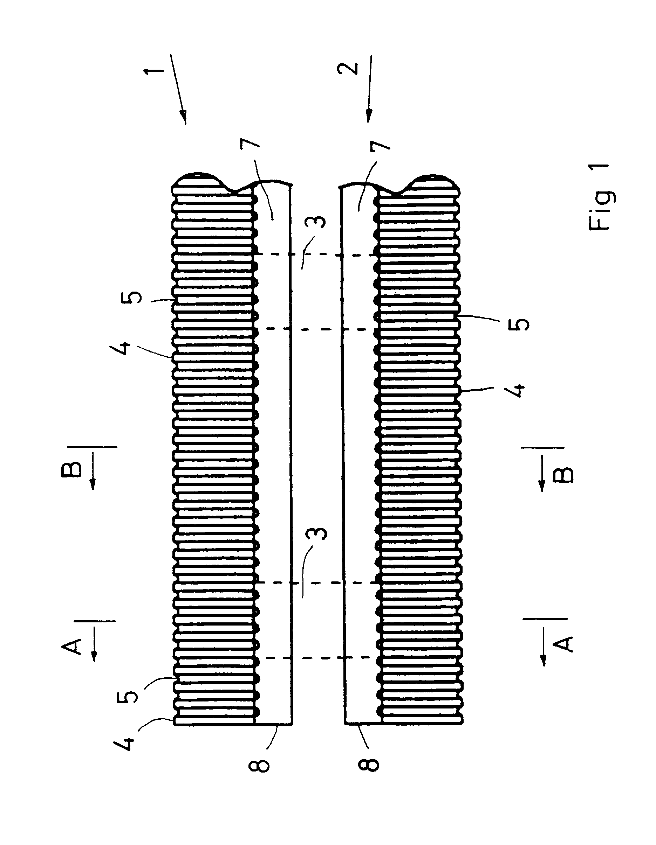

Fig. 1 shows a side elevation of approximately half of a coupling device according to the invention. This coupling device comprises two chuck devices 1 and 2 which are intended to be inserted interiorly in end portions of two such mutually meeting pipe ends as are to be coupled together. Between the chuck devices 1 and 2, there extend screws 3 (shown by broken lines), which are in mesh with the one chuck device and which, with their free end, force against the other chuck device. In those pipe ends which are to be coupled, there are provided apertures which are in register with the screws 3 so that thereby the ends thereof may be accessible for turning the screws.

The two chuck devices have a number of clamping surfaces 4 which in between have recessed surface portions 5 which, in the clamping position of the coupling device interiorly in the pipes, are located a distance from the inner surfaces of the pipes. The clamping surfaces 4 are largely shaped so as to be complementary to the inner surfaces of the pipes.

In the illustrated embodiment, the clamping surfaces 4 are in the form of narrow bands which extend in the circumferential direction along at least a portion of the periphery of the two chuck devices 1 and 2. The clamping surfaces 4 are furthermore transversely directed, for example at right angles, to the longitudinal direction of the coupling device.

It will be apparent from the foregoing description that the clamping surfaces 4 and the recessed surface portions 5 may be seen as formed by alternatingly disposed lands and riflings which extend in the circumferential direction of the coupling device transversely of its longitudinal direction.

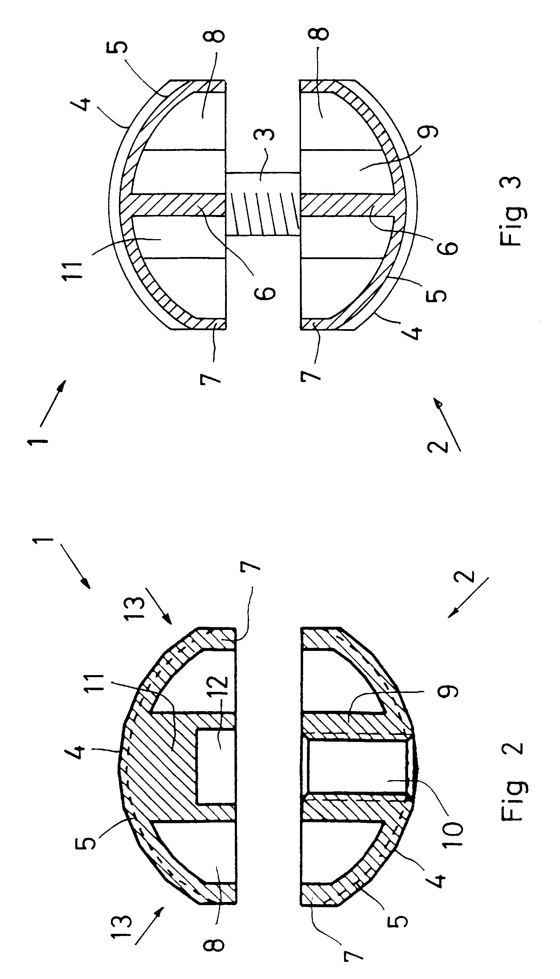

It will be apparent from Figs. 2 and 3 that the chuck devices 1 and 2 are in the form of at least partly cylindrical shell-shaped bodies. On their mutually facing sides, these shell-shaped bodies are provided with at least one, but preferably three longitudinal and inwardly directed rigidifying rids 6 and 7. The ends of these rigidifying ribs 6 and 7 are, at the opposite ends of the chuck devices, connected to end walls 8 which are approximately in the form of segments of a circle.

The centrally placed rigidifying rib 6 is suitably placed in a longitudinal diameter plane to the coupling device when this is located in its clamping position interiorly in the pipes. Furthermore, the two laterally located rigidifying ribs 7 may ideally lie in planes which are approximately parallel to the plane of the centrally located rigidifying ribs.

The lower chuck device 2 in Figs. 2 and 3 has tubular bushings 9 with threaded through bores 10 for the screws 3. The centre axes of the bores 10 are suitably placed in a common plane which also suitably coincides with the longitudinal diameter plane which also holds the centrally located rigidifying rib 6. The threaded bushings 9 are at least one in number in the region of each pipe, but are preferably two or more in number. Furthermore, the plane of the centre axes to the threaded bores 10 is located symmetrically in the chuck device 2.

The upper chuck device 1 in Figs. 2 and 3 has, in positions corresponding to the positions of the bushings 9 of the lower chuck device 2, bushings 11 which, on their inwardly facing ends, have bottom holes 12 for accommodating the end portion of a screw 3. The placement of the bushings 11 in the upper chuck device 1 corresponds wholly to the placement of the bushings 9 in the lower chuck device 2.

It will be clearly apparent from the foregoing disclosure that, on insertion of screws 3 in the threaded bores 10 in the lower chuck device 2 and tightening of the screws until their inner ends bottom out in the bottom holes 12 in the upper chuck device 1, it will be ensured that both of the chuck devices are urged away from one another on continued tightening of the screws. It will also be apparent from the foregoing description that the presence of the exterior rigidifying ribs with the clamping surfaces 4 prevents the chuck devices from being deformed in a direction towards smaller radius of curvature by being forced in approximately as shown by the arrows 13. It will hereby be prevented that the clamping force becomes restricted to regions at the outer ends of the bushings 9 and 11 so that, broadly speaking, only an extremely limited surface abutment would be achieved.

It will further be perceived that the presence of the longitudinal rigidifying ribs 6 and 7 greatly increases the flexural rigidity of the construction.

On mass production of products of the type to which the present invention belongs, it is a sought-for goal to minimize material consumption. In such instance, it has proved optimal to impart to the shell-shaped bodies a radial thickness which entails that the radial extent in the region of the clamping surfaces 4 is approximately twice as large as the radial extent at the recessed surface portions 5.

The above-described coupling device can be designed for coupling of straight pipes in which the centre line of the pipes and the coupling device is a common straight line. However, the coupling device can also be given a certain curvature so that the centre line of the coupling device, when the device is located in the clamping position in the pipes, may follow a circular arc. Hereby, the coupling device may simply be designed also for coupling pipe bends and curved pipes.

It has been mentioned above that those pipes which are to be coupled must have apertures so as to allow access of the screws 3. Suitably, the coupling device is placed in such a manner that the screws will have a vertical direction and the apertures in the pipes will be located facing downwards. This entails that, in the particular application of a staircase banister or other type of rail, the apertures will be invisible and that they can hardly be reached when the rail is being used. In order to reduce the feeling of that unevenness in the surface which the openings represent. It might be appropriate to adapt the length of the screws in such a manner that their ends will be located approximately in the plane of the outer surface of the pipes or slightly inside this plane.

### DESCRIPTION OF ALTERNATIVE EMBODIMENTS

In the foregoing, the coupling device has been described with alternatingly disposed circumferential riflings and grooves which cover the major portion of the outer surface of the chuck device, possibly with the exception of the outsides of the laterally disposed reinforcement ribs 7. However, it is not necessary according to the present invention to provide these projecting ribs and interjacent grooves throughout the entire longitudinal extent of the coupling device, it being optionally sufficient with such ribs and grooves in the central region of the coupling device where, thus, the pipe coupling proper will be located, and in the regions at the screws 3.

Nor is it necessary according to the invention that the grooves 5 and the ribs 4 have the same width. For example, the grooves 5 may be wider than the ribs.

According to the invention, nor do the ribs 4 with the clamping surfaces need to be located in the circumferential direction of the coupling device, but these ribs can be placed with a certain pitch in relation to the circumferential direction. In addition, the clamping surfaces and the ribs may be designed with a wave pattern, zig-zag pattern or the like. Series with punctiform clamping surfaces may also be conceivable.

The clamping surfaces 4 have been described as band-shaped and approximately complementary to the inner surface of the pipes. This implies that the clamping surfaces are in the form of approximately one-way curved, narrow cylindrical bands. However, according to the invention these clamping surfaces may be double curved so that, seen in the view according to Fig. 1, they have arched crests or peaks. Alternatively, the peaks may be more or less sharp or barb-like so that the one flank (facing towards the centre of the coupling device) is approximately at right angles to or transversely directed in relation to the longitudinal direction, while the opposing flank will be obliquely directed.

It is also possible according to the present invention to dispose, interiorly in the chuck devices, more longitudinal reinforcement ribs than those described above.

It is further possible according to the present invention to provide interiorly in the chuck devices transverse reinforcement ribs which, thus, would correspond to the reinforcement ribs 4 on the outside, or possibly the end walls 8.

The invention is defined in the appended Claims.

## Claims

1. A pipe coupling arrangement including two chuck devices (1, 2) expandable away from one another by means of screws (3) and disposed interiorly in and bridging the joint between those pipes to be coupled said chuck devices being substantially rigid and in the form of substantially semi-cylindrical or part cylindrical shell shaped bodies, said pipes having openings for access to the screws (3), said chuck devices having, on the outside, projecting circumferentially extending rigidifying ribs the outer surfaces thereof forming clamping surfaces (4) substantially complementary to the interior surfaces of the pipes, recessed surfaces (5) being provided between adjacent clamping surfaces, **characterized** in that the chuck devices (1, 2) are provided, on their mutually facing sides, with a longitudinal rigidifying rib (6) and that the shell-shaped bodies are provided, on their mutually facing sides along their longitudinal edges, with inwardly projecting rigidifying ribs (7) which are substantially parallel with a longitudinal diameter plane to the coupling device when this is located in clamping position in the pipes and that opposing ends are connected via approximately circle-segment shaped end walls (8).

2. The arrangement as claimed in claim 1, **characterized** in that the rigidifying ribs are provided circumferentially and substantially transversely in relation to the longitudinal direction of the chuck devices (1, 2).

3. The arrangement as claimed in claim 1, **characterized** in that the rigidifying ribs are provided with a pitch in relation to the circumferential direction or that they are waved or zigzag-shaped.

4. The arrangement as claimed in any one of claims 1-3, **characterized** in that the radial thickness of the chuck devices (1, 2) at the clamping surfaces (4) is approximately twice as large as therebetween.

5. The arrangement as claimed in any one of claims 1-4, **characterized** in that the coupling device has, when this is located in the clamping position in the pipes, a substantially straight centre line.

6. The arrangement as claimed in any one of claims 1-4, **characterized** in that the coupling device has, when this is located in the clamping position in the pipes, a centre line which is curved along a circular arc.

7. The arrangement as claimed in any one of the preceding claims, **characterized** in that the screws (3) are disposed with their longitudinal axes in a longitudinal diameter plane to the coupling device.

8. The arrangement as claimed in any one of the preceding claims, **characterized** in that the screws (3) are of such a length that their ends, when the coupling device is located in the clamping position in the pipes, lie flush with or slightly inside the outer defining surface of the pipe.

## Patentansprüche

1. Rohrkopplungs-Anordnung mit zwei Spannvorrichtungen (1,2), die voneinander weg mittels Schrauben (3) ausgedehnt werden können und innen in der Verbindungsstelle zwischen diesen zu koppelnden Rohren angeordnet sind und diese überbrücken, wobei die genannten Spannvorrichtungen im wesentlichen starr und in Form von im wesentlichen halbzylindrischen oder teilzylindrischen schalenförmigen Körpern sind, wobei die Rohre Öffnungen zum Zugang zu den Schrauben (3) haben, wobei die Spannvorrichtungen, auf der Außenseite, vorstehende sich in Umfangsrichtung erstreckende Verstärkungsrippen haben, deren Außenflächen Spannflächen (4) bilden, die im wesentlichen komplementär zu den Innenflächen der Rohre sind, wobei zwischen benachbarten Klemmflächen ausgesparte Flächen (5) vorgesehen sind, dadurch gekennzeichnet, daß die Spannvorrichtungen (1,2) an ihren einander zugewandten Seiten mit einer sich in Längsrichtung erstreckenden Verstärkungsrippe (6) versehen sind und daß die schalenförmigen Körper an ihren einander zugewandten Seiten entlang ihren Längsrändern mit nach innen vorstehenden Verstärkungsrippen (7) versehen sind, die im wesentlichen parallel zu einer sich in Längsrichtung erstreckenden Durchmesserebene der Kopplungsvorrichtung sind, wenn diese in einer Klemmposition in den Rohren angeordnet ist, und daß einander gegenüberliegende Enden über ungefähr kreissegmentförmige Endwände (8) verbunden sind.

2. Anordnung nach Anspruch 1, dadurch gekennzeichnet, daß die Verstärkungsrippen in Umfangsrichtung und im wesentlichen quer zur Längsrichtung der Spannvorrichtungen (1,2) vorgesehen sind.

3. Anordnung nach Anspruch 1, dadurch gekennzeichnet, daß die Verstärkungsrippen in bezug auf die Umfangsrichtung eine Steigung haben oder daß sie wellen- oder zickzackförmig sind.

4. Anordnung nach einem der Ansprüche 1 bis 3, dadurch gekennzeichnet, daß die radiale Dicke der Spannvorrichtungen (1,2) an den Klemmflächen (4) ungefähr doppelt so groß ist wie zwischen diesen.

5. Anordnung nach einem der Ansprüche 1 bis 4, dadurch gekennzeichnet, daß die Kopplungsvorrichtung, wenn sie in der Klemmposition in den Rohren angeordnet ist, eine im wesentlichen gerade Mittellinie hat.

6. Anordnung nach einem der Ansprüche 1 bis 4, dadurch gekennzeichnet, daß die Kopplungsvorrichtung, wenn sie in der Klemmposition in den Rohren angeordnet ist, eine Mittellinie hat, welche entlang eines Kreisbogens gekrümmt ist.

7. Anordnung nach einem der vorhergehenden Ansprüche, dadurch gekennzeichnet, daß die Schrauben (3) mit ihren Längsachsen in einer sich in Längsrichtung erstreckenden Durchmesserebene der Kopplungsvorrichtung angeordnet sind.

8. Anordnung nach einem der vorhergehenden Ansprüche, dadurch gekennzeichnet, daß die Schrauben (3) eine solche Länge haben, daß ihre Enden, wenn die Kopplungsvorrichtung in der Klemmposition in den Rohren angeordnet ist, mit der äußeren Begrenzungsfläche des Rohrs fluchten oder geringfügig innerhalb von dieser liegen.

## Revendications

1. Agencement de couplage de tubes comprenant deux dispositifs formant mandrins de serrage (1, 2) susceptibles de s'écarter l'un de l'autre au moyen de vis (3) et disposés à l'intérieur de et passant au-dessus de la jointure entre ces tubes devant être couplés, lesdits dispositifs formant mandrins de serrage étant sensiblement rigides et sous la forme de corps en forme de coques sensiblement semi-cylindriques ou partiellement cylindriques, lesdits tubes présentant des ouvertures pour permettre l'accès aux vis (3), lesdits dispositifs formant mandrins de serrage ayant, sur leur face extérieure, des nervures de renforcement faisant saillie et s'étendant circonférentiellement, leurs surfaces extérieures formant des surfaces de serrage (4) sensiblement complémentaires aux surfaces intérieures des tubes, des surfaces creuses (5) étant prévues entre les surfaces de serrage adjacentes, caractérisé en ce que les dispositifs formant mandrins de serrage (1, 2) sont munis, sur leurs côtés tournés les uns vers les autres, d'une rainure de renforcement longitudinale (6) et en ce que les corps en forme de coque sont munis, sur leurs côtés tournés les uns vers les autres le long de leurs bords longitudinaux, de nervures de renforcement (7) faisant saillie vers l'intérieur qui sont sensiblement parallèles à un plan de diamètre longitudinal par rapport au dispositif de couplage lorsqu'il est placé en position de serrage dans les tubes et en ce que les extrémités opposées sont raccordées par l'intermédiaire de parois d'extrémité (8) en forme de segment de cercle.

2. Agencement selon la revendication 1, caractérisé en ce que les nervures de renforcement sont prévues circonférentiellement et sensiblement transversalement par rapport à la direction longitudinale des dispositifs formant mandrins de serrage (1, 2).

3. Agencement selon la revendication 1, caractérisé en ce que les nervures de renforcement sont placées à un certain intervalle par rapport à la direction circonférentielle ou en ce qu'elles sont ondulées ou en forme de zigzag.

4. Agencement selon l'une quelconque des revendications 1 à 3, caractérisé en ce que l'épaisseur radiale des dispositifs formant mandrins de serrage (1, 2) au niveau des surfaces de serrage (4) est environ deux fois plus grande que l'espace entre celles-ci.

5. Agencement selon l'une quelconque des revendications 1 à 4, caractérisé en ce que le dispositif de couplage présente, lorsque celui-ci est placé dans la position de serrage à l'intérieur des tubes, un axe central sensiblement rectiligne.

6. Agencement selon l'une quelconque des revendications 1 à 4, caractérisé en ce que le dispositif de couplage présente, lorsque celui-ci est placé dans la position de serrage à l'intérieur des tubes, un axe central qui est incurvé le long d'un arc circulaire.

7. Agencement selon l'une quelconque des revendications précédentes, caractérisé en ce que les vis (3) sont disposées, avec leurs axes longitudinaux, dans un plan de diamètre longitudinal par rapport au dispositif de couplage.

8. Agencement selon l'une quelconque des revendications précédentes, caractérisé en ce que les vis (3) sont d'une longueur telle que leurs extrémités, lorsque le dispositif de couplage est placé dans la position de serrage à l'intérieur des tubes, sont alignées avec ou rentrent légèrement à l'intérieur de la surface définissant l'extérieur du tube.
